# DEMANDE DE BREVET EUROPEEN

(11) **EP 0 999 720 A1**
(43) Date de publication de la demande: **10.05.2000**
(21) Numéro de dépôt: 99402387.7
(22) Date de dépôt: 30.09.1999
(51) Int. Cl.: H04Q 11/04

(54) **Dispositif de commutation de circuits dans un réseau de télécommunications**

(30) Priorité: 05.11.1998 FR 9813920
(71) Demandeur: ALCATEL, 75008 Paris (FR)
(72) Inventeur: Bergaire, André, 78180 Montigny le Bretonneux (FR); Olivier, Germain, 91080 Courcouronnes (FR)
(74) Mandataire: Sciaux, Edmond

(57) **Abrégé**

Pour permettre une liaison à haut débit entre des utilisateurs (1) d'un réseau de télécommunications, on prévoit de placer des modems (2, 8) à haut débit, de type HDSL, à la fois chez ces utilisateurs et en accès de ligne correspondant à ces utilisateurs dans un central autonome (7). Les modems de ce central autonome sont par ailleurs reliés à des unités d'accès (12-14) de ce central autonome qui comporte des réseaux de multiplexeurs (16-18) à insertion-extraction reliés ensemble en anneau (15) et à un port (31) d'extraction. On montre qu'on peut organiser d'une manière simple la commutation dynamique entre des utilisateurs reliés à une même unité d'accès, ou à des unités d'accès voisines situées dans le même central autonome. Les autres communications sont acheminées vers d'autres centraux autonomes.

## Description

La présente invention a pour objet un dispositif de commutation de circuits à mettre en place dans un réseau de télécommunications, notamment un réseau de télécommunications de type public, encore que ce dispositif pourrait trouver une utilisation dans un réseau de télécommunications privé. Un but de l'invention est notamment de mettre à la disposition des utilisateurs des canaux de trafic numérique à haut débit, typiquement de l'ordre de 2 Mbit/s et au-delà pour permettre à chacun de communiquer avec les autres, à haut débit et ce, à la demande, appel par appel.

Dans le domaine de la téléphonie, on connaît des systèmes de transmission de données utilisant des modems du réseau conventionnel. Ces modems, dans la technique actuelle, ne permettent qu'un débit égal ou inférieur à 56 Kbit/s. Avec de tels modems, il n'est donc bien entendu pas possible d'assurer les débits souhaités ci-dessus. Cependant ce type liaison présente l'avantage de pouvoir être réalisé, point à point, à la demande de l'abonné, appel par appel.

Une autre solution pour transporter des informations numérisées à la demande (éventuellement même de la parole numérisée, ou des images) consiste à utiliser des réseaux numériques réalisés conformément à la norme RNIS (ISDN en langage anglo-saxon) pour laquelle dans chaque canal un débit de 64 Kbit/s a été institué. Dans ce cas il est mis à la disposition des abonnés des canaux de deux types. Un premier type permet d'avoir accès à deux voies à 64 Kbit/s. Un deuxième type permet d'avoir accès à trente voies à 64 Kbit/s. Ce deuxième mode propose des débits proches du débit désiré. Cependant dans ce cas, les trente voies sont indépendantes. Ceci signifie essentiellement qu'elles peuvent subir des retards de transmission différents d'une voie à l'autre. En conséquence, même si un utilisateur choisissait de répartir son message sur ces trente voies, il ne pourrait pas le récupérer avec facilité à l'arrivée, sauf à prévoir des circuits de réorganisation d'une complexité exorbitante compte tenu des configurations possibles d'ordre d'arrivée, de trente voies prises parmi trente voies.

On connaît par ailleurs, notamment en France par le réseau de la société France Télécom connu sous l'appellation TRANSFIX, la mise à disposition de lignes à haut débit, notamment à 2 Mbit/s. On retrouve par ailleurs ce même type de liaisons entre des centraux téléphoniques, ou entre des parties de centraux téléphoniques. Ces liaisons présentent cependant l'inconvénient par rapport au but recherché qu'elles ne sont pas réalisées à la demande immédiate, appel par appel, elles doivent être réservées de longue date avant leurs mises en place. Elles ne peuvent pas être changées immédiatement au fur et à mesure du besoin d'un abonné. Les lignes ainsi louées, par opposition aux deux cas précédents, ne permettent que des liaisons fixes point à point.

Une troisième génération de solution utilise des techniques de type ADSL. ADSL signifie Asymetric Digital Subscriber Line dont la traduction est ligne d'abonné numérique à débit asymétrique. Ces techniques sont mises en oeuvre notamment dans le réseau Internet. Ces techniques consistent à faire descendre les informations depuis des serveurs de données jusqu'aux utilisateurs avec un haut débit, typiquement de l'ordre de 2 Mbit/s et au-delà. Par contre dans un sens montant, qui représente normalement des questions émanant d'utilisateurs, et à destination du réseau, le débit est bien moins important. Il est notamment limité à 128 Kbit/s. Dans ce cas la liaison est effectivement de type appel par appel, mais elle est dissymétrique dans les débits proposés.

L'invention a pour objet de remédier à ces inconvénients et de proposer une solution dans laquelle n'importe quel utilisateur, s'il le désire, pourra jouir d'une voie à haut débit dans les deux sens pour échanger des communications avec n'importe quel autre utilisateur. L'idée de base de l'invention est d'utiliser des équipements existants d'accès et de transport d'informations. Avec ces équipements existants, on construit un réseau de télécommunications à haut débit et des circuits de commutation associés. Ces circuits de commutation permettent de mettre à disposition des accès à haut débit, typiquement 2 Mbit/s et au-delà, en duplex total, et symétrique pour chaque utilisateur d'un réseau de commutation public. Ceci signifie par ailleurs qu'on continuera à utiliser les paires de fils de cuivre aboutissant au domicile d'un abonné utilisateur au moins pour des accès à un débit jusqu'à 2 Mbit/s. Ceci signifie qu'on conservera par ailleurs des mêmes possibilités de services : mode de taxation, services spéciaux, accès à la demande.

L'invention concerne, pour résoudre ces problèmes un dispositif de commutation de circuits dans lequel, dans des niveaux hiérarchiquement inférieurs de commutation au moins, on placera des anneaux de multiplexeurs à insertion-extraction de façon à organiser, le plus tôt possible dans la hiérarchie des commutations, des distributions locales d'informations. En effet, si on met à disposition de tous les utilisateurs une liaison à haut débit, ils vont utiliser ces hauts débits. Par conséquent le nombre d'informations binaires à traiter par les réseaux de commutation augmentera d'une manière excessive. Pour éviter d'avoir à gérer dans un organe central toutes les informations ainsi distribuées, on organisera hiérarchiquement la commutation de manière à ne faire transiter, vers des centraux hiérarchiquement supérieurs de répartition, que les trafics qui ne sont pas locaux et qui nécessitent des liaisons interrégionales, voire des liaisons intercontinentales.

Pour effectuer cette commutation, dans l'invention on l'effectue alors dans ces anneaux. Ces anneaux servent ainsi à réaliser une commutation de circuits dynamique. Ces anneaux sont commandés dans ce but par des signaux de commande résultant de l'interprétation en temps réel de signaux de signalisation utiles à l'établissement d'une communication, et qui sont normalement émis par un appelant.

L'invention a donc pour objet un dispositif de commutation de circuits dans un réseau de télécommunications, comportant :
- un central autonome,
- un ensemble d'unités d'accès, chaque unité d'accès étant munie d'un anneau primaire de multiplexeurs primaires à insertion-extraction, chaque multiplexeur primaire étant relié à des équipements d'abonné ;
- et des moyens de commande des multiplexeurs primaires ;
**caractérisé** en ce que les moyens de commande des multiplexeurs primaires comportent :
- des moyens pour recevoir des signaux de signalisation émis par un équipement d'abonné relié à cet ensemble d'unité d'accès ;
- produire des signaux de routage correspondant à ces signaux de signalisation, ces signaux de routage étant appliqués en commande aux multiplexeurs primaires de cet ensemble d'unité d'accès, pour établir une connexion entre cet équipement d'abonné et un autre équipement d'abonné.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1: la représentation schématique d'un dispositif de commutation de circuits selon l'invention dans un réseau de télécommunications ;
- Figure 2: une représentation schématique d'un multiplexeur à insertion-extraction, organe essentiel de distribution et de commutation selon l'invention ;
- Figure 3 : une représentation d'une architecture particulière d'un étage de connexion-commutation selon l'invention.

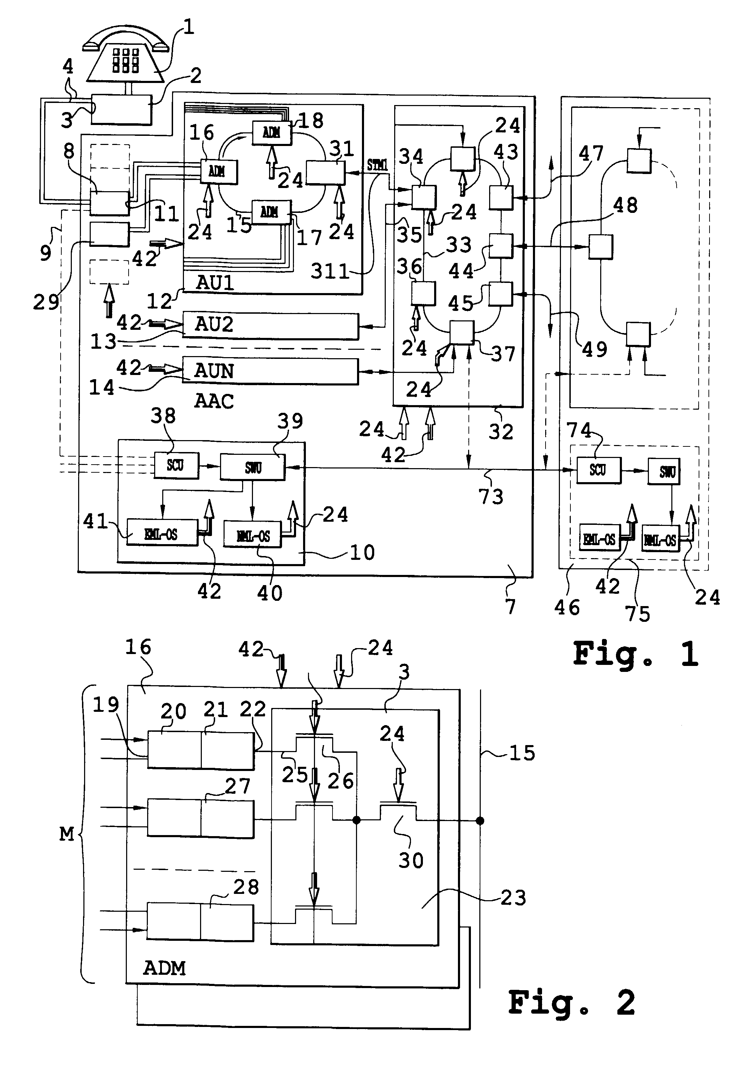

La **figure 1** montre un dispositif de commutation de circuits d'un réseau de télécommunications selon l'invention. Dans ce réseau, un utilisateur abonné possède un équipement 1, représenté ici schématiquement par un poste téléphonique, pour se connecter au réseau. Dans une réalisation pratique, on placera chez cet abonné un modem 2 à haut débit. Dans un exemple ce haut débit est un haut débit de type 2 Mbit/s. Le modem sera un modem de type HDSL dont la signification est High bit rate Digital Subscriber Line. Ce qui signifie que le modem est un modem d'abonné susceptible d'un haut débit numérique. Ce modem dispose essentiellement de deux types de port, côté abonné. Un premier port sert à recevoir et à transmettre des données de communication. Un deuxième port sert à recevoir et à transmettre des signaux de signalisation, notamment en émission des signaux permettant une numérotation et une recherche d'abonné, et en réception un signal de sonnerie ou faisant fonction de sonnerie.

Côté réseau, le modem 2 possède un port 3 connecté à une paire de fils de cuivre 4. Ce port 3 est celui par lequel sortent ou entrent les informations échangées par l'utilisateur. Ce port 3 véhicule donc les bits que l'utilisateur veut transmettre à un autre abonné ou reçoit d'un autre abonné. Ce port 3 véhicule aussi des signaux de signalisation. Ces signaux de signalisation sont des signaux renseignant, pour un appel, sur l'identité (par exemple la localisation, ou le numéro de téléphone) de l'abonné utilisateur de l'équipement 1 qui émet le message. Ces signaux de signalisation sont aussi et surtout des signaux de destination : ils comportent essentiellement le numéro de téléphone d'un autre abonné que l'abonné utilisant l'équipement 1 cherche à joindre. En réception, ces signaux de signalisation sont des signaux provoquant la sonnerie, et plus généralement la mise en réception de l'équipement 1 pour recevoir des bits qui lui sont transmis.

Les signaux de signalisation sont envoyés à un central du réseau de télécommunications en aval. Le canal de transmission de ces signaux de signalisation emprunte de préférence la paire 4, de manière à ne pas nécessiter une modification des infrastructures. Par exemple, ces signaux sont envoyés au début de la communication. Dans ce cas les circuits du modem 2 sont aptes à reconnaître, dans la trame des signaux transmis, leur nature de signaux de signalisation, et à agir en conséquence. Le protocole de fonctionnement du modem reste identique. Mais il comporte deux sessions, une première session, très courte, pendant laquelle le modem transmet sur la paire 4 les signaux de signalisation, puis une deuxième session, aussi longue qu'on le désire pendant laquelle l'abonné utilisateur de l'équipement 1 transmet ses informations.

Le premier modem 2 est relié par les fils 4, dans un central autonome 7 du réseau de télécommunications en aval, à un deuxième modem à haut débit 8 du même type que le modem 2. Le modem 8 effectue deux opérations. D'une part il transmet les signaux de signalisation reçus, par un canal 9, à un circuit 10 de commande de manière à ce que ces signaux de signalisation soient traités par ce circuit 10. D'autre part, il reçoit, correspondant à la deuxième session de la communication, les informations que l'abonné utilisateur de l'équipement 1 veut échanger avec un autre abonné. Dans ce but le modem 8 démodule les informations qui avaient été émises par modulation par le modem 2 sur la ligne 4 et restitue à sa sortie 11, sur deux ou n fils, par exemple de type G703, le débit d'informations de 2 Mbit/s émis par l'équipement 1.

Le central autonome 7 comporte au moins une unité d'accès 12, notée AU1, pour recevoir les signaux débités par des sorties telles que 11 de modems tels que 8 situés dans ce central 7. De manière à gérer des commutations locales de manière préférentielle, le central autonome 7 comportera un certain nombre d'unités d'accès, par exemple 48 unités d'accès AU1 à AUN notées ici 12 à 14. Eventuellement, il en comportera plus. Les centraux autonomes ont pour but de répartir les communications locales de manière à ne pas faire véhiculer, jusqu'à un central de niveau hiérarchiquement supérieur, des communications qui pourraient être commutées à un niveau local.

Une unité d'accès, selon l'invention, est essentiellement munie d'un anneau 15, dit primaire ici, de multiplexeurs appelés aussi ici multiplexeurs primaires. L'anneau 15 permet donc de relier entre eux un certain nombre de multiplexeurs primaires. Dans un exemple préféré, on reliera entre eux trois multiplexeurs primaires 16 à 18. L'anneau 15 proprement dit est un canal qui relie entre eux ces multiplexeurs primaires. Les multiplexeurs 16 à 18 sont, pour simplifier l'explication à ce stade, des multiplexeurs duplex, fonctionnant en insertion-extraction. Ces multiplexeurs sont dits ADM pour Add and Drop Multiplexer qui signifie multiplexeur à insertion-extraction. Chaque multiplexeur primaire est susceptible d'être connecté en entrée et en sortie à un certain nombre de voies de communication émanant des modems tels que 8. Dans un exemple chaque multiplexeur 16 à 18 pourra recevoir 63 communications, en pratique, il sera donc connecté à 63 modems tels que 8.

La raison pour laquelle on installe trois multiplexeurs sur un anneau primaire 15 est liée à des taux d'occupation statistiques locaux. Si, à certains endroits, les habitudes changent, on pourra prévoir de changer et le nombre des multiplexeurs 16 à 18 sur un anneau 15, et/ou le débit de l'anneau lui-même. Le débit sera modifié en modifiant notamment le protocole d'échange sur l'anneau.

La commutation mise en oeuvre par les multiplexeurs 16 à 18 est dans un exemple une commutation de type temporel.

La **figure 2** montre, en raccourci, le principe de fonctionnement du multiplexeur 16 dans sa fonction d'insertion. Ce multiplexeur 16 comporte M entrées-sorties (M égale 63 dans l'exemple préféré). Sur chacune de ses entrées-sorties, notamment l'entrée-sortie 19, est disposé un ensemble de registres 20-21 formant une pile du type premier entré-premier sorti. Une sortie 22 de ces registres est connectée à l'anneau 15 par l'intermédiaire d'un circuit de commutation 23 recevant un ordre 24. Par exemple la sortie 22 est reliée par une liaison 25 à l'anneau 15. La liaison 25 comporte, très schématiquement, un transistor 26 en série. Lorsque le transistor 26 est rendu passant, le contenu du registre 21 est transmis à l'anneau 15. Bien entendu dans ce cas, les ordres 24 sont tels que d'autres registres 27 et 28 du multiplexeur 16, qui correspondent aux autres entrées de ce multiplexeur, ne sont pas reliés à l'anneau 15. La trame d'information qui est véhiculée par l'anneau 15 est ainsi constituée par le déversement des informations provenant des registres 21, 27 et 28 à un rythme imposé par les ordres 24 sur les différents interrupteurs du circuit de commutation 23.

La **figure 2** montre en outre un multiplexeur dans son fonctionnement en insertion : lorsque les informations proviennent des entrées-sorties 19 et sont injectées sur l'anneau 15. Entre les multiplexeurs qu'il comporte, ce dernier est sur le plan pratique une simple connexion électrique (référencée par rapport à la masse). Cependant, bien entendu les multiplexeurs 16 seront duplex, réversibles. En pratique, ils seront constitués pour pouvoir fonctionner en insertion et en extraction de données sur et hors de l'anneau 15. Le fonctionnement sera identique, seuls seront modifiés les registres 20, 21, 27 et 28 qui fonctionneront dans l'autre sens. Eventuellement, selon d'autres techniques de réalisation des multiplexeurs 16, ces registres 20, 21, 27 et 28 seront bidirectionnels.

Si un abonné utilisateur de l'équipement 1, dont la communication aboutit à un modem 8 relié au multiplexeur 16, demande à entrer en relation avec un autre abonné connecté à un autre modem 29 (figure 1) connecté au même multiplexeur 16, un circuit de commande 10 fournit les signaux de commande 24 pour que le multiplexeur 16 effectue l'extraction des bits mis en place dans la trame qui circule sur l'anneau 15. De cette façon, deux abonnés qui sont proches l'un de l'autre peuvent échanger leurs informations, à haut débit, sans avoir à mettre en service tous les circuits de commutation du central 7, qui vont être décrits plus loin. Au besoin, dans ce cas, à l'endroit du multiplexeur 16, l'anneau 15 ne sera réellement relié au multiplexeur 16 que pour les signaux qui doivent aboutir soit à un autre multiplexeur 17 ou 18 sur le même anneau, soit à une autre unité d'accès 13 ou 14 dans le même central 7, soit encore à un autre central autonome différent du central 7. Dans ce cas, le circuit de commutation 23 comporte d'autres circuits de commutation, très schématiquement représentés par le transistor 30 (figure 2), pour mettre en relation, au niveau du multiplexeur 16 lui-même, des voies d'insertion avec des voies d'extraction.

Sur le plan pratique, il suffit de choisir de raccorder au multiplexeur 16 des utilisateurs dont les lignes 4 aboutissent aux modems 8 et 29 qui soient proches les uns des autres, ou éventuellement dont le trafic entre eux aura pu être mesuré comme étant fréquent.

D'autres utilisateurs, par exemple géographiquement disposés à proximité de l'utilisateur de l'équipement 1, sont raccordés par leur modem aux multiplexeurs 17 et 18 qui font partie comme le multiplexeur 16 de l'anneau 15. Dans ce cas, les ordres 24 émis dans le circuit 10 sont de nature à provoquer un échange simple, par utilisation de l'anneau 15 seulement, entre des voies d'insertion et d'extraction des multiplexeurs 16, 17 et 18. De cette façon on organise selon l'invention un trafic interne à l'anneau primaire 15 par l'intermédiaire des multiplexeurs primaires 16 à 18.

L'anneau 15 comporte par ailleurs un port d'entrée sortie 31. Le port 31 comporte des circuits analogues à ceux des multiplexeurs 16 à 18. Il comporte essentiellement un commutateur du même type que le commutateur 23 de manière à faire transiter sur l'anneau 15 des informations binaires en provenance ou à destination d'une liaison 311 avec un étage 32 de connexion-commutation. Le débit du port 31 est de préférence celui de l'anneau 15. Il est compris entre 25% et 50%, de préférence égal à 1/3, du débit total potentiel de l'ensemble des multiplexeurs de l'anneau. Le choix de réalisation des anneaux 15 avec trois multiplexeurs d'insertion-extraction et un port 31 est lié à une étude statistique. Selon cette étude tous les utilisateurs de l'unité d'accès 12 ne solliciteront pas cette dernière en même temps. Il n'est donc pas nécessaire que les équipements qu'elle contient soient capables d'acheminer, simultanément, autant de communications qu'il y en a de potentiellement possibles.

L'étage 32 comporte comme l'unité d'accès 12 un réseau en anneau, selon un anneau secondaire 33, de multiplexeurs secondaires à insertion-extraction tels que 34. Une entrée-sortie du multiplexeur 34 est ainsi reliée à la ligne 311. Une autre entrée-sortie du multiplexeur 34 est reliée par un canal 35 à un port d'une autre unité d'accès, l'unité d'accès 13 par exemple. Un multiplexeur 34 peut ainsi être connecté à plusieurs des unités d'accès 12 à 13. D'autres unités d'accès du central autonome 7 sont reliées à d'autres multiplexeurs secondaires tels que 36 et 37. Dans un exemple pratique, s'il y a 48 unités d'accès telles que 12 à 14, on les groupera par douze, de manière à réaliser un anneau 33 avec quatre multiplexeurs secondaires à insertion-extraction tels que 34, 36 ou 37. Les multiplexeurs 34, 36 et 37 sont également commandés pour leurs circuits de commutation interne par les ordres 24.

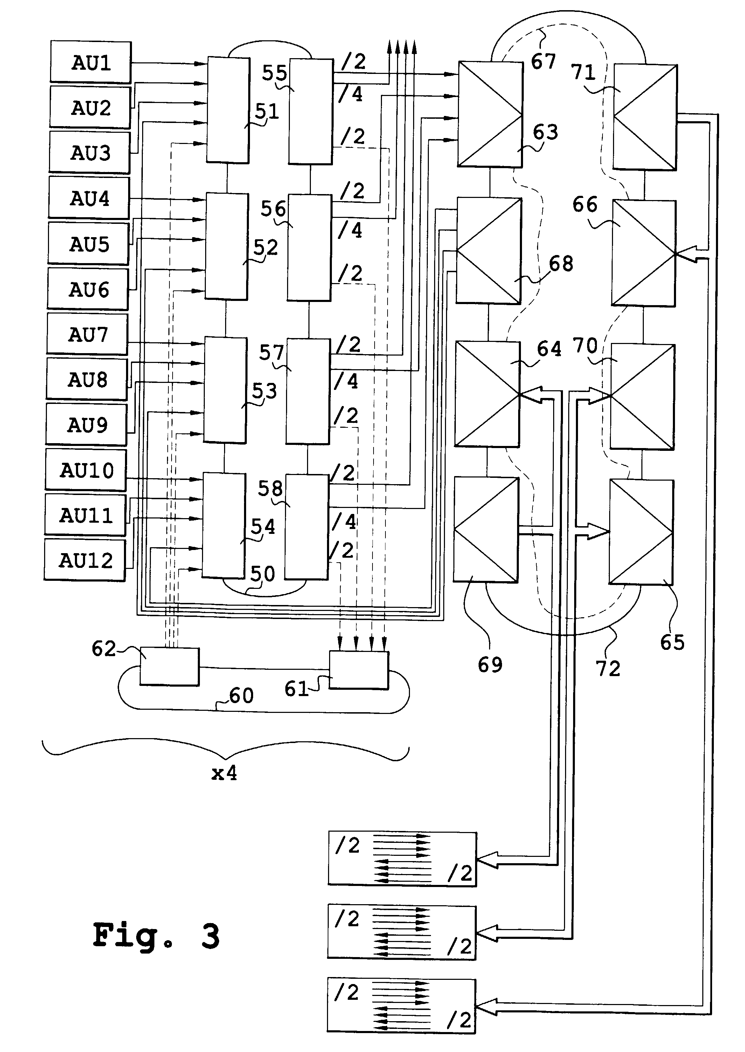

La **figure 3** montre une réalisation détaillée de l'étage 32 dans un exemple particulier. Elle sera décrite plus loin.

Le central autonome 7 comporte également le circuit de commande 10 qui reçoit les signaux de signalisation par le canal 9 évoqué ci-dessus. Le circuit 10 comporte un premier circuit 38 de concentration des signaux de signalisation reçus. Le circuit 38 est en relation avec un circuit de commande de commutation 39 qui est chargé de gérer les numéros de téléphone des abonnés et leurs droits. Le circuit 39 est également chargé de définir le meilleur chemin, le routage, à établir pour organiser la communication entre des abonnés à interconnecter. Le circuit de commande de commutation 39 peut également établir des éléments d'information nécessaires à la facturation des communications assurées. Le circuit de commande de commutation 39 produit ensuite, en correspondance d'un routage organisé, des signaux de routage qui sont transmis à un circuit 40 d'interprétation. Le circuit d'interprétation 40 interprète, au niveau local du central autonome 7, les signaux de routage pour produire des ordres 24 de commutation à appliquer aux différents multiplexeurs 16 à 18, 34, 36, 37 et plus généralement aux unités d'accès 12 à 14, ainsi qu'à l'étage 32 de connexion-commutation pour que, sur le plan électrique, des liaisons soient correctement effectuées.

Comme on le verra plus loin le circuit 39 de commande de commutation émet par ailleurs des signaux de signalisation, à transmettre à un autre central autonome pour que celui-ci achemine à leur destinataire, raccordé à cet autre central autonome, des informations qui leur sont destinées. Le circuit 10 comporte enfin un circuit logistique 41 réalisant une supervision matérielle, de gestion, de configuration, et d'allocation des ressources du central 7. Le circuit 41 est aussi en relation avec le circuit de commande de commutation 39. Le circuit 41 élabore des ordres 42 de configuration des différents équipements, modems 8 et 29, ou multiplexeurs 16 à 18, ou autre. La différenciation ainsi proposée des circuits 39, 40 et 41 est seulement liée à une architecture particulière. Cependant toute autre architecture est envisageable du moment qu'elle permet de produire les ordres 24 et 42 nécessaires au fonctionnement du central autonome 7.

Dans la pratique, le circuit 39 est apte à reconnaître que la destination d'un message issu du modem 8 par exemple est un des modems 29 relié au même multiplexeur que le modem 8, ou à un autre multiplexeur dans le même anneau 15, pour produire les ordres 24 adéquats. Dans ce cas le circuit 40 produit des ordres 24 pour que le multiplexeur concerné en insertion par le message place, dans la trame circulant sur l'anneau 15, les blocs de données à une position temporelle déterminée, et fasse en sorte que le même multiplexeur, ou un autre dans le même anneau selon le cas, les prélève en extraction, à cette même position temporelle. De cette façon on organise une commutation dynamique, même au niveau local.

La liaison 311 entre une unité d'accès 12 et l'étage 32 de connexion-commutation est une liaison à très haut débit. Dans un exemple elle est, comme les liaisons entre les multiplexeurs à insertion-extraction 16, 17 et 18 de l'anneau 15, une liaison conforme à la norme SDH (Synchronous Digital Hierarchy, dont la signification est hiérarchie numérique synchrone), de type STM-1 (Synchronous Transport Module, level 1, dont la signification est module de transport synchrone de niveau 1), c'est à dire à 155 Mbit/s et capable d'acheminer 63 voies à 2 Mbit/s, en plus de signaux de synchronisation. Selon la distance qui sépare l'unité d'accès 12 à 14 de l'étage 32, la liaison 311 sera réalisée par des connexions électriques ou par fibre optique.

L'étage de connexion-commutation 32 est donc selon ce qui a été indiqué hiérarchiquement supérieur à l'étage de commutation constitué par les unités d'accès 12 à 14. Selon une première utilisation, l'étage 32 fonctionne comme une de ces unités d'accès 12 à 14. Il permet cependant dans ce cas de redistribuer à une unité d'accès donnée, par exemple l'unité d'accès 13, des informations provenant d'une autre unité d'accès donnée, par exemple l'unité d'accès 12. Compte tenu que dans un exemple, le multiplexeur 34 sera capable de recevoir douze liaisons telles que la liaison 311, un tel multiplexeur 34 sera au moins douze fois, par exemple seize fois, plus rapide, c'est à dire plus puissant, qu'un des multiplexeurs 16 à 18. Son fonctionnement sera cependant du même type.

L'anneau 33 de l'étage 32 présente par ailleurs une autre différence par rapport à l'anneau 15 de l'unité 12. En effet il possède plusieurs ports d'insertion-extraction 43 à 45. Le port 44 permet ainsi de relier le central autonome 7 à un centre de transit 46 dont la structure peut être du même type que celle du central autonome 7. Par un port 43 ou 45 l'anneau 33 peut être reliée à d'autres centraux autonomes ou à d'autres centres de transit. Des liaisons 47 à 49 entre le central autonome 7 et ces autres centraux autonomes, ou centres de transit, sont des liaisons à très haut débit. Dans un exemple elles seront des liaisons, conformes à la norme SDH, avec un débit de l'ordre, ou supérieur à 2,5 Gbit/s. Dans ce cas, elles sont réalisées avec des fibres optiques. En pratique ces liaisons sont capables de passer environ 1000 communications au débit de 2 Mbit/s simultanément.

La **figure 3** montre une variante de réalisation de l'étage 32. Bien que ses équipements soient bidirectionnels, leur fonctionnement est expliqué ici pour un sens de communication. L'explication complémentaire s'en déduit. L'étage 32 comporte un anneau 50 avec quatre multiplexeurs d'insertion 51 à 54 et quatre multiplexeurs d'extraction 55 à 58. Les multiplexeurs 51-54 comportent chacun trois voies d'insertion reliées à trois unités d'accès, par exemple les unités AU1, AU2 et AU3 pour le multiplexeur 51. En option, ces multiplexeurs 51-54 comportent aussi une autre voie d'insertion reliée aux sorties des multiplexeurs d'extraction 55-58 par l'intermédiaire d'un anneau 60 comportant deux multiplexeurs, un en insertion 61, l'autre en extraction 62. Les liaisons de l'anneau 60 à l'anneau 50 sont montrées en tirets pour en faire ressortir le caractère optionnel. Si elles sont mises en place, ces liaisons de l'anneau 60 avec l'anneau 50 achemineront par exemple chacune deux voies de type STM-1 à 155 Mbit/s qui pourront être en parallèle. L'anneau 60 peut servir à organiser la commutation des communications entre des abonnés reliés à un même anneau 50, donc reliés aux unités d'accès AU1 à AU12 ici.

Pour les accès à d'autres centraux autonomes 7, les multiplexeurs 55 à 58 comportent des sorties, dans un exemple à quatre voies de type STM-1 à 155 Mbit/s qui pourront être en parallèle. Il y a ici quatre sorties à quatre voies.

L'anneau 50, éventuellement complétée par l'anneau 60, est réalisé en quatre exemplaires pour desservir les 48 unités d'accès AU1 à AU48. Un anneau 50, complété le cas échéant d'un anneau 60, forme un module. Les multiplexeurs d'extraction 55-58 de l'anneau 50 sont en plus reliés à des voies d'insertion de multiplexeurs d'insertion 63 à 66. Ces multiplexeurs 63-66 peuvent être reliés ensemble dans un anneau 67 (en tirets). De préférence, ils seront connectés à des multiplexeurs d'extraction 68 à 71 par l'intermédiaire d'un anneau 72 commun, tertiaire, d'interconnexion entre les modules. L'anneau 72 permet ainsi d'organiser la commutation entre des abonnés reliés à l'anneau 50 et ceux reliés à un autre anneau, du même type que l'anneau 50. Dans un exemple, les liaisons en insertion et en extraction des anneaux 50 avec l'anneau 72 achemineront chacune deux voies au débit de base d'une liaison entre une unité d'accès et un anneau 50, c'est à dire, dans le cas considéré précédemment, deux voies de type STM-1 à 155 Mbit/s, qui pourront être en parallèle.

Lorsque les informations doivent être transmises d'un central autonome 7 à un centre de transit 46 ou un autre central autonome, les signaux de signalisation produits par le circuit de commande de commutation 39 du central 7 peuvent être acheminés par une liaison spécialisée 73 ainsi que représenté à la figure 1. Néanmoins, étant donné que les liaisons 47 à 49 sont disponibles, il pourra être préférable dans un des multiplexeurs, par exemple 37, de l'étage de connexion-commutation 32 de réserver une entrée-sortie pour acheminer les signaux de signalisation correspondants. Ceux-ci aboutiront alors comme prévu à un circuit de concentration de signaux de signalisation 74, du même type que le circuit 38, mais par l'intermédiaire de la liaison à très haut débit 48. Dans ce cas, de préférence, les signaux de signalisation doivent être envoyés par anticipation de manière à ce qu'un circuit 75 de l'autre central, équivalent au circuit 10, puisse effectuer la préparation des ordres de commutation 24 nécessaire pour ce central.

L'invention est remarquable en ce sens que la commutation est hiérarchisée. Les liaisons 47 à 49 ne transmettent que les informations à destination d'autres centraux autonomes, et non pas les informations qui ont pu avoir été échangées dans le central 7 lui-même. Elle est encore remarquable en ce que tous les organes de commutation qui la constituent sont formés de la même manière : un réseau de multiplexeurs à insertion-extraction reliés entre eux par un anneau, et relié par ailleurs, par au moins un port, à au moins un autre organe de commutation. Elle est aussi remarquable en ce que la commutation dynamique est entreprise par le circuit 10 qui commande les multiplexeurs des unités d'accès, et de l'étage de connexion-commutation à partir de signaux de signalisation émis par les abonnés.

De plus, l'infrastructure réalisée par les paires de fils de cuivre 4 et par les liaisons en fibre optique 47 à 49 est déjà existante dans les réseaux téléphoniques. On notera par ailleurs que, dans le cas ou un abonné souhaiterait un accès à un débit de l'ordre de plusieurs dizaines de mégabits par secondes, voire de 155 Mbit/s, son équipement pourra être raccordé au moyen de fibres optiques, directement, c'est à dire sans passer par des modems, à un multiplexeur à insertion-extraction d'une unité d'accès.

## Revendications

1. Dispositif de commutation de circuits dans un réseau de télécommunications, comportant :
- un central autonome,
- un ensemble d'unités d'accès (12-14), chaque unité d'accès étant munie d'un anneau primaire (15) de multiplexeurs primaires (16-18) à insertion-extraction, chaque multiplexeur primaire (16-18) étant relié à des équipements d'abonné (1) ;
- et des moyens (10) de commande des multiplexeurs primaires (16-18);
**caractérisé** en ce que les moyens (10) de commande des multiplexeurs primaires comportent :
- des moyens(38) pour recevoir des signaux de signalisation (9) émis par un équipement d'abonné (1) relié à cet ensemble d'unité d'accès ;
- produire des signaux de routage (24) correspondant à ces signaux de signalisation, ces signaux de routage étant appliqués en commande aux multiplexeurs primaires (16-18) de cet ensemble d'unité d'accès, pour établir une connexion entre cet équipement d'abonné (1) et un autre équipement d'abonné.

2. Dispositif selon a revendication 1, caractérisé en ce qu'il comporte
- un premier modem (2) à haut débit placé chez un abonné (1) et un deuxième modem (8) à haut débit placé dans ce central autonome (7) de ce réseau de télécommunications, le deuxième modem étant raccordé au premier modem par une ligne (4) cuivre de ce réseau de télécommunications,
- une des entrées sorties (11) d'un multiplexeur primaire étant raccordée au deuxième modem.

3. Dispositif selon la revendication 2, caractérisé en ce que le haut débit des modems est de 2Mbit/s.

4. Dispositif selon l'une des revendications 1 à 3, caractérisé en ce qu'il comporte dans l'anneau primaire d'une unité d'accès, trois multiplexeurs primaires et un port.

5. Dispositif selon la revendication 4, caractérisé en ce qu'il comporte un port de l'unité d'accès dont le débit est compris entre 25% et 50%, de préférence égal à 1/3, du débit total potentiel de l'ensemble des multiplexeurs de l'anneau.

6. Dispositif selon l'une des revendications 1 à 5, caractérisé en ce qu'il comporte
- dans ce central autonome, un étage (32) de connexion-commutation, cet étage de connexion-commutation comportant un anneau (33) secondaire de multiplexeurs secondaires (34, 36,37) à insertion-extraction, une des entrées-sorties d'un de ces multiplexeurs secondaires étant raccordée (311) à un port (31) de l'anneau primaire d'une unité d'accès,
- les signaux de routage étant appliqués en commande aux multiplexeurs primaires et secondaires.

7. Dispositif selon la revendication 6, caractérisé en ce qu'il comporte un port (44) de l'anneau secondaire à très haut débit pour relier un central autonome à un autre central autonome ou à un centre de transit de communications.

8. Dispositif selon la revendication 7, caractérisé en ce qu'il comporte une liaison (48) par fibre optique reliée au port à très haut débit.

9. Dispositif selon l'une des revendications 7 à 8, caractérisé en ce que, pour transmettre des signaux de signalisation à un autre central autonome ou à un centre de transit de communications, il comporte un circuit (37) pour faire passer ces signaux par le port à très haut débit.

10. Dispositif selon l'une des revendications 6 à 9, caractérisé en ce qu'un multiplexeur secondaire est plus puissant qu'un multiplexeur primaire.
